(19) Europäisches Patentamt / European Patent Office / Office européen des brevets

(11) **EP 4 437 375 B1**

(12) **EUROPEAN PATENT SPECIFICATION**

(45) Date of publication and mention
of the grant of the patent:
**20.05.2026 Bulletin 2026/21**

(21) Application number: **22830677.5**

(22) Date of filing: **23.11.2022**

(51) International Patent Classification (IPC):
**G02B 6/42** *(2006.01)*

(52) Cooperative Patent Classification (CPC):
**G02B 6/4296; G02B 6/4206;** G02B 6/3624;
G02B 6/421

(86) International application number:
**PCT/US2022/080460**

(87) International publication number:
**WO 2023/097302 (01.06.2023 Gazette 2023/22)**

(54) **ALL-FIBER LASER BEAM TUNING BY ADJUSTMENT OF ANGULAR INTENSITY DISTRIBUTION**

ABSTIMMUNG EINES KOMPLETTFASERLASERSTRAHLS DURCH ANPASSUNG DER WINKELINTENSITÄTSVERTEILUNG

ACCORDAGE DE FAISCEAU LASER TOUT-FIBRE PAR RÉGLAGE DE LA DISTRIBUTION D'INTENSITÉ ANGULAIRE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **24.11.2021 US 202163264574 P**

(43) Date of publication of application:
**02.10.2024 Bulletin 2024/40**

(73) Proprietor: **NLIGHT, Inc.**
**Camas, WA 98607 (US)**

(72) Inventors:
• **FARROW, Roger L.**
**Camas, Washington 98607 (US)**
• **KLINER, Dahv A.V.**
**Camas, Washington 97607 (US)**
• **LUGO, Juan Carlos**
**Camas, Washington 98607 (US)**
• **O'DEA, Brendan G.**
**Camas, Washington 98607 (US)**

(74) Representative: **Dehns**
**10 Old Bailey**
**London EC4M 7NG (GB)**

(56) References cited:
EP-A2- 0 257 999     WO-A1-2018/217284
WO-A1-2020/264056     WO-A1-2021/150782
US-B2- 9 250 390

**Description**

RELATED APPLICATION

This application claims the benefit of U.S. Provisional Patent Application No. 63/264,574, filed November 24, 2021.

TECHNICAL FIELD

The technology disclosed herein relates to fiber lasers and fiber-coupled lasers. More particularly, the disclosed technology relates to methods, apparatus, and systems for adjusting a near-field transverse spatial intensity distribution at an output of a fiber laser or fiber-coupled laser.

BACKGROUND INFORMATION

As described in U.S. Patent No. 10,423,015, titled "Adjustable Beam Characteristics," and its related patents, nLIGHT, Inc. developed technology for varying beam properties by controlling a spatial intensity distribution of a laser beam, i.e., adjusting its near-field intensity distribution.

The '015 patent describes a fiber operable to provide a laser beam having variable beam characteristics (VBC) that may reduce cost, complexity, optical loss, or other drawbacks of the conventional methods. This VBC device is configured to vary a wide variety of optical beam characteristics. Such beam characteristics can be controlled using the VBC device thus allowing users to tune various beam characteristics to suit the particular requirements of an extensive variety of laser processing applications. For example, a VBC device may be used to tune: beam diameter, divergence distribution, BPP, intensity distribution, $M^2$ factor, NA, optical intensity, power density, radial beam position, radiance, spot size, or the like, or any combination thereof.

In some embodiments, the '015 patent describes adjusting the coupling of the beam into a so-called ring fiber, which has two or more guiding regions. A ring fiber has one or more annular cores optionally surrounding a central (non-annular) core, with low-index glass layers separating the cores so that light coupled into a core will be guided in that core. The angular intensity distribution of the beam need not be directly controlled and depends on various factors such as the laser divergence, bending of the upstream optical fibers, and overlap of the near-field transverse spatial intensity distribution with the guiding confinement regions of the ring fiber.

To achieve a variety of beam diameters and shapes using embodiments and techniques described in the '015 patent, it is possible to divide the spatial intensity distribution of a laser beam coupled to a ring fiber between two or more guiding zones of the fiber. This approach causes a portion of the beam to overlap with the low-index region(s) separating the zones, resulting in increased divergence. This increased divergence is undesirable for some applications, e.g., it can cause overheating of some process optics. US9250390B2 discloses an optical delivery waveguide for a material laser processing system which includes a small lens at an output end, transforming laser beam divergence inside the waveguide into a spot size after the lens.

SUMMARY OF THE DISCLOSURE

This disclosure describes embodiments for controlling and adjusting the near-field intensity distribution of a beam that emerges from an optical fiber train (i.e., coupled lengths of optical fiber) by controlling and adjusting its angular intensity distribution within a portion of the fiber train. The angular intensity distribution is preserved and propagated toward the end of the fiber train using a step-index fiber. A graded-index (GRIN) fiber of a certain length is spliced to the distal end of the step-index fiber to convert the angular intensity distribution to a near-field intensity distribution. The technique, therefore, need not use a ring fiber and thus avoids the aforementioned issue of divergence increase.

According to a first aspect of the present invention, there is provided an optical beam delivery device as claimed in claim 1.

The optical beam delivery device may also include the second length of optical fiber as a step-index optical fiber segment having a length configured to azimuthally scramble the modified beam.

The optical beam delivery device may also include the third length of optical fiber configured to generate a ring-shaped beam as the output beam.

The optical beam delivery device may also include the third length of optical fiber having a different effective focal length than that of the first length of optical fiber.

The optical beam delivery device may also include the first length of optical fiber being configured to change the first angular intensity distribution by increasing an angular width of the input beam.

The optical beam delivery device may also include the GRIN optical fiber segment being responsive to the controllable perturbation configured to change a bend radius of the GRIN optical fiber segment.

The optical beam delivery device may also include the different effective focal length being attributable to a different gradient constant selected to impart magnification of the output beam.

The optical beam delivery device may also include the second length of optical fiber configured to preserve the angular width of the modified beam.

The optical beam delivery device may also include the first length of optical fiber being responsive to the controllable perturbation applied to the first length of optical fiber as a microbend.

The optical beam delivery device may also include the GRIN optical fiber segment having a length of about N*½ pitch, where N is any positive integer.

An optical beam delivery system may include the optical beam delivery device and a ring fiber acting as the source fiber coupled thereto. A variable beam characteristic (VBC) device may include the ring fiber.

An optical beam delivery system may include the optical beam delivery device having a step-index fiber acting as the source fiber coupled thereto.

Other technical features may be readily apparent to one skilled in the art from the following figures, descriptions, and claims.

The foregoing and other objects, features, and advantages will become more apparent from the following detailed description, which proceeds with reference to the accompanying figures, which may not be drawn to scale.

BRIEF DESCRIPTION OF THE DRAWINGS

To easily identify the discussion of any particular element or act, the most significant digit or digits in a reference number refer to the figure number in which that element is first introduced.

FIG. 1 is a side view of an optical beam delivery device including a bendable ¼ pitch length of GRIN fiber, a step-index length of fiber, and a straight GRIN length of fiber, which is not claimed but which is described for explanatory purposes.

FIG. 2 is a beam propagation simulation plot (propagation direction is from left to right along a Z axis) for the example of FIG. 1, showing a mode field in an X-Z plane as the beam propagates through the GRIN fiber.

FIG. 3 is a set of beam propagation simulation plots for the example of FIG. 1, showing an adjustment of angular intensity distribution in an X-Y angle space (upper plot) and its corresponding beam profile (lower plot) at an output of the bendable ¼ pitch length of GRIN fiber when it is straight.

FIG. 4 is a set of beam propagation simulation plots for the example of FIG. 1, showing an adjustment of angular intensity distribution in an X-Y angle space (upper plot) and its corresponding beam profile (lower plot) at an output of the bendable ¼ pitch length of GRIN fiber when it is bent.

FIG. 5 is a set of experimentally produced beam propagation plots for the example of FIG. 1, showing an X-Y intensity distribution (upper plot) and its corresponding beam profile (lower plot) at an end of the step-index length of fiber when the bendable ¼ pitch length of GRIN fiber is straight.

FIG. 6 is a set of experimentally produced beam propagation plots for the example of FIG. 1, showing an X-Y intensity distribution (upper plot) and its corresponding beam profile (lower plot) at an end of the step-index length of fiber when the bendable ¼ pitch length of GRIN fiber is bent.

FIG. 7 is a set of beam propagation simulation plots for an output beam showing an X-Y intensity distribution (upper plot) and its corresponding beam profile (lower plot) generated according to the example of FIG. 1 with a straight GRIN fiber.

FIG. 8 is a set of beam propagation simulation plots for an output beam showing an X-Y intensity distribution (upper plot) and its corresponding beam profile (lower plot) generated according to the example of FIG. 1 with a bent GRIN fiber.

FIG. 9 is a side view of an optical beam delivery device including multiple lengths of optical fiber, which is not claimed but which is described for explanatory purposes.

FIG. 10 is a side view of an optical beam delivery device including multiple lengths of optical fiber, according to an embodiment of the claimed invention.

FIG. 11 is a side view of an optical beam delivery device including multiple lengths of optical fiber, according to an embodiment of the claimed invention.

FIG. 12 is a flow chart showing a method of modifying an angular intensity distribution of an input beam so that it is converted to an output beam having an adjustable near-field transverse spatial intensity distribution in accordance with one embodiment.

DETAILED DESCRIPTION OF EMBODIMENTS

Introduction

As used in this application and in the claims, the singular forms "a," "an," and "the" include the plural forms unless the context clearly dictates otherwise. Additionally, the term "includes" means "comprises." Further, the term "coupled" does not exclude the presence of intermediate elements between the coupled items.

As used herein, optical radiation refers to electromagnetic radiation at wavelengths of between about 100 nm and 10 μm, and typically between about 500 nm and 2 μm. Examples based on available laser diode sources and optical fibers generally are associated with wavelengths of between about 800 nm and 2,000 nm. In some examples, propagating optical radiation is referred to as one or more beams having diameters, asymmetric fast and slow axes, beam cross-sectional areas, and beam divergences that can depend on beam wavelength and the optical systems used for beam shaping. For convenience, optical radiation is referred to as light or beams in some examples and need not be at visible wavelengths. Forward-propagating light or optical beams or beam portions refer to light, beams, or beam portions that propagate in a direction of normal emission. Backward-propagating light or optical beams or beam portions refer to light, beams, or beam portions that propagate in an opposite direction of normal emission.

Component Overview

To understand the characteristics of embodiments described in the present disclosure, it is helpful to first understand the underlying components and physical phenomena exploited with the components. Accordingly, the following paragraphs summarize optical fibers and lenses.

Optical fibers: An optical fiber is a thin, flexible strand of material (typically glass) that guides light within a core that is surrounded by a cladding. The core has a higher refractive index than the cladding, causing light to be guided by total internal reflection. The refractive index profile (RIP), i.e., the refractive index as a function of position transverse to the fiber axis, determines many of the important properties of the fiber. Many but not all fibers are cylindrically symmetric (i.e., the index is independent of azimuthal angle about the fiber axis). The optical fibers, therefore, may have circular, square, rectangular, polygonal, oval, elliptical, or other cross-sections. In some embodiments, the core and claddings are approximately concentric. In other examples, one or more of the core and claddings are decentered, and in some examples, core and cladding orientation and/or displacement vary along a waveguide length.

Optical fibers are typically formed of silica (glass) that is doped (or undoped) to provide predetermined RIPs. In some examples, fibers or other waveguides are made of other materials such as fluorozirconates, fluoroaluminates, fluoride or phosphate glasses, chalcogenide glasses, or crystalline materials such as sapphire, depending on wavelengths and other properties of interest. Refractive indices of silica and fluoride glasses are typically about 1.5, but refractive indices of other materials such as chalcogenides can be 3 or more. In still other examples, optical fibers can be formed in part or completely of plastics (polymers).

In some examples, a doped waveguide core such as a fiber core provides optical gain in response to pumping. In the examples disclosed herein, a waveguide core such as an optical fiber core is doped with a rare earth element such as Nd, Yb, Ho, Er, or other active dopants or combinations thereof. Such actively doped cores can provide optical gain in response to optical or other pumping. As disclosed below, waveguides having such active dopants can be used to form optical amplifiers, or, if provided with suitable optical feedback such as reflective layers, mirrors, Bragg gratings, or other feedback mechanisms, such waveguides can generate laser emissions. Optical pump radiation can be arranged to co-propagate and/or counter-propagate in the waveguide with respect to a propagation direction of an emitted laser beam or an amplified beam.

Step-index fibers: The most common RIP is known as "step index," in which the core has a uniform index and is surrounded by the cladding with a uniform (lower) index. In a step-index fiber, light launched into the fiber core in a given location tends to spread radially and azimuthally to fill the core, i.e., the core does not preserve spatial information about the location of the launched beam. Light rays launched at a particular angle with respect to the fiber axis tend to exit the fiber core at the same angle (in a cone because of azimuthal scrambling), i.e., step-index fibers typically preserve angular information. In particular, the preservation of launch and the output angles (i.e., the far-field) is a property leveraged by embodiments of this disclosure. (Note that the terms far- and near-field intensity distribution mean, respectively, an angular intensity distribution (angular as with respect to the optical axis) and a transverse spatial intensity distribution.) Various effects can cause imperfect preservation of the launch angle (e.g., causing higher divergence for the output than the input rays), and multiple studies have investigated methods to minimize this effect.

GRIN fibers: Some fibers have a non-uniform RIP in the core and (less often) in the cladding. A common, non-uniform core RIP is known as "graded index" or "GRIN," in which the index value decreases monotonically from the center of the core to the cladding. In many cases, the GRIN profile is parabolic. The size of a beam coupled into a parabolic GRIN fiber may oscillate periodically as the beam propagates along the fiber, with the oscillation period known as the "pitch" of the fiber. A parabolic GRIN fiber with an appropriate length can act as a lens that focuses or collimates a beam. This property is also used in free-space GRIN lenses, i.e., it is not limited to fibers.

Multi-clad fibers: Another example of a non-uniform RIP is a fiber with multiple claddings ("double-clad fiber," "triple-clad fiber," etc.). As with other non-uniform RIPs, propagation of light in a multi-clad fiber depends on the specific RIP and the launch conditions. Light launched into the highest-index guiding region may not spread into all the cladding regions, but light launched into a cladding layer will spread into all the higher index regions.

Multi-core fibers: Some fibers have multiple cores, i.e., multiple high-index guiding regions separated by surrounding low-index regions. The cores can have different sizes and shapes. Light launched into a given core will typically spread out to fill that core (as in a fiber with a single core) but will not spread into the other cores because the surrounding low-index region prevents propagation between the cores. Multi-core fibers are generally more expensive than more standard fibers, especially step-index fibers. The low-index regions separating the guiding regions generate highly divergent light if a portion of the beam is coupled into them. The downstream optics must be designed to accommodate this excess divergence, which typically adds cost, complexity, and/or optical loss (reduced efficiency). If not properly managed, the excess divergence can cause overheating or damage of the optics. The dimensions of the guiding regions are fixed when the fiber is manufactured. The beam dimensions thus cannot be continuously varied (although the power in each region can be continuously varied). Furthermore, if an application prefers different dimensions (e.g., a larger diameter ring), a new multi-core fiber must be fabricated, which can lead to a proliferation of product designs (which complicates and adds cost to manufacturing). Splicing of multi-core fibers in the factory and field is complicated by the need to align multiple guiding regions, which each have fabrication tolerances. Achieving the desired splicing performance can require excessively tight fiber tolerances (increasing cost), low splice yields, and/or performance degradation upon splicing (e.g., from coupling light into the low-index regions).

Note that the above discussion of the different types of optical fibers primarily pertains to multimode fibers, in which the ray picture of light propagation is accurate. Single-mode or near-single-mode fibers introduce other phenomena that are less relevant to the embodiments described in this disclosure.

Lenses: Lenses are ubiquitous in optical systems. A lens is conventionally thought of as a piece of glass with one or both surfaces curved, and the direction of propagation of a light ray is influenced by refraction at the surfaces. Other implementations of lenses are possible, including a GRIN lens (as mentioned above) in which the RIP of the material varies with radial position (rather than employing curved surfaces). The end of a fiber or an end cap attached to a fiber can have a curved surface to function as a lens. A design property of a lens is its focal length. A collimated input beam is focused to a point one focal length away from the lens (in the ray picture). Similarly, a point source located one focal length away from a lens is collimated at the lens output. Stated more generally, a lens maps between position and angle, i.e., a lens converts the angle of a ray at the input focal plane to position at the output focal plane, and it converts the input position of a ray at the input focal plane to angle at the output focal plane.

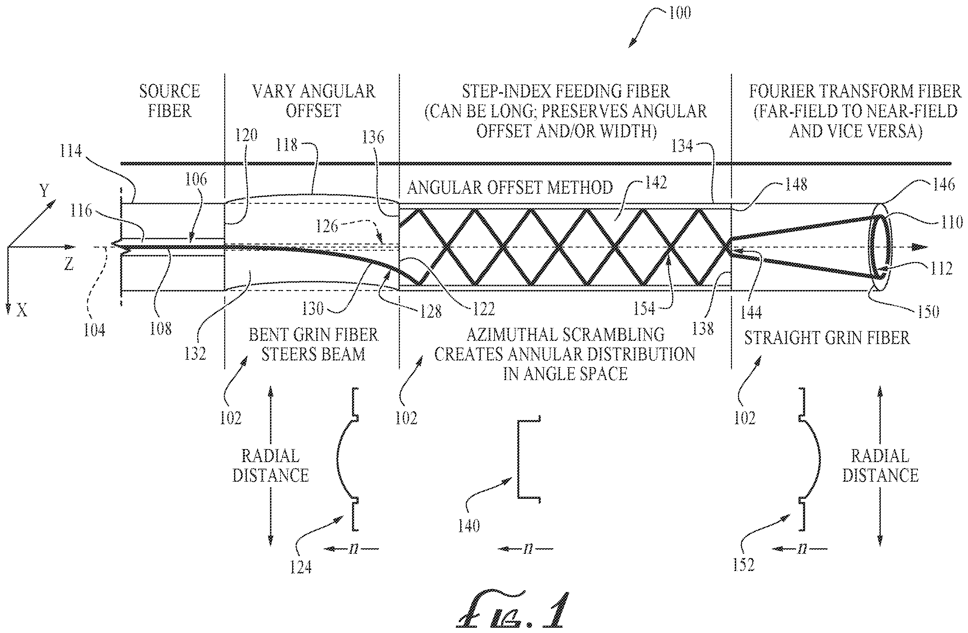

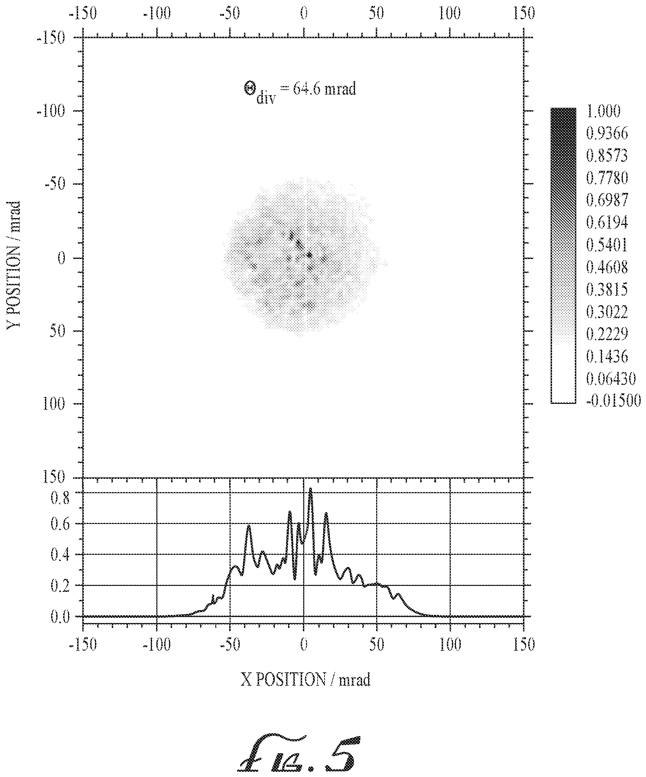

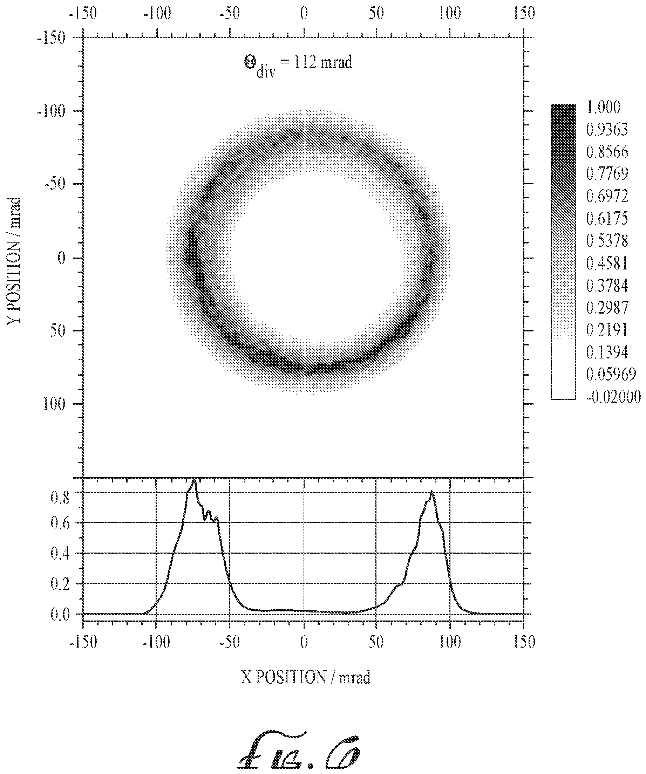

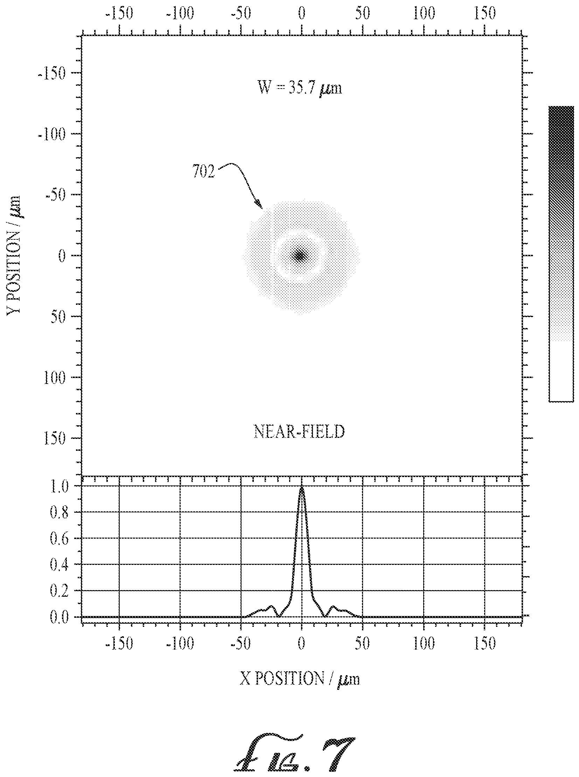

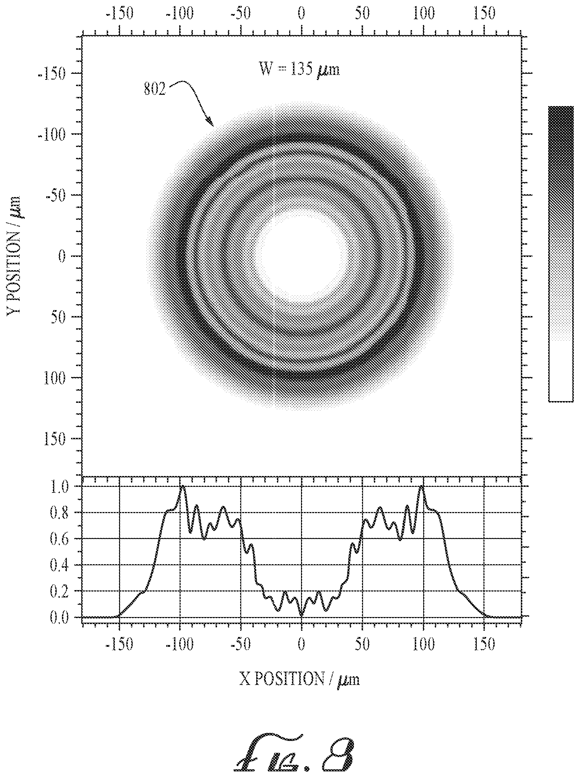

FIG. 1 shows an optical beam delivery device 100, according to a first example (referred to as an angular offset example). Optical beam delivery device 100 includes multiple lengths of optical fiber 102 arranged along an optical axis 104 and configured to modify an angular intensity distribution 106 of an input beam 108 so that it is converted to an output beam 110 having an adjustable near-field transverse spatial intensity distribution 112. In other words, the near-field transverse spatial intensity distribution is adjustable between Gaussian (see e.g., FIG. 5 and FIG. 7) and ring (see e.g., FIG. 6 and FIG. 8) shaped output beams.

In one example of FIG. 1, input beam 108 is delivered from a source fiber 114 having a step-index core 116. In other examples, a source fiber is a ring fiber (e.g., one or more annular cores surrounding an optional central core), and the ring fiber may be a component of a VBC device described in the '015 patent. The term source fiber is any fiber (feeding or process) providing an input beam and that is fiber coupled (e.g., spliced) to an image relay fiber assembly. The term fiber coupled (or couplable) includes a direct physical connection as well as connections that are slightly spaced apart, i.e., at or within one Rayleigh range, which is the distance along the propagation direction of a beam from the waist to the place where the area of the cross section is doubled.

Source fiber 114 is spliced to a first length of optical fiber 118, which has a first input 120 and a first output 122. Thus, first input 120 is coupled to a source fiber 114 and is configured to receive therefrom input beam 108 that is azimuthally symmetric with respect to optical axis 104.

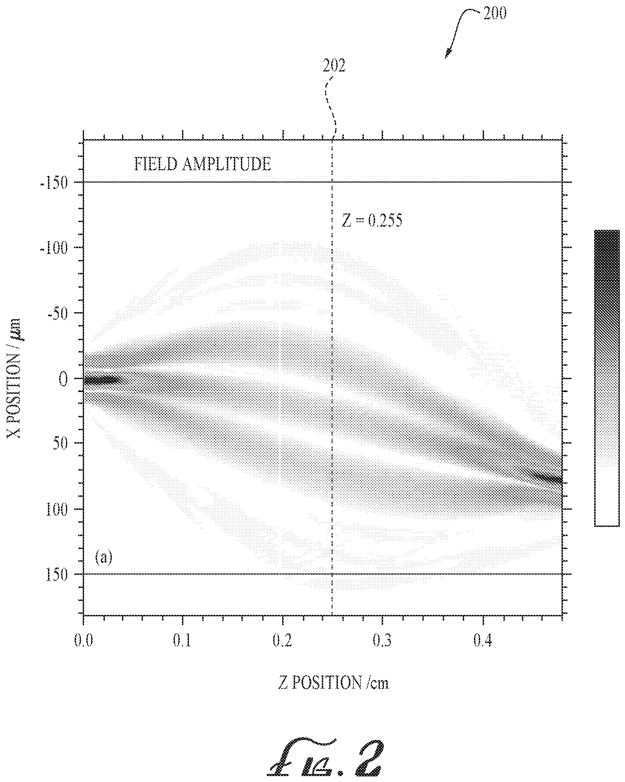

First length of optical fiber 118 has a first RIP 124. First RIP 124 is configured to produce, in response to a controllable perturbation (see, e.g, bending shown in FIG. 2), a change in angular intensity distribution 106 from a first angular intensity distribution 126 corresponding to input beam 108 to a second angular intensity distribution 128 corresponding to a modified beam 130 at first output 122. Other examples of controllable perturbation devices are shown in FIG. 24 of the '105 patent.

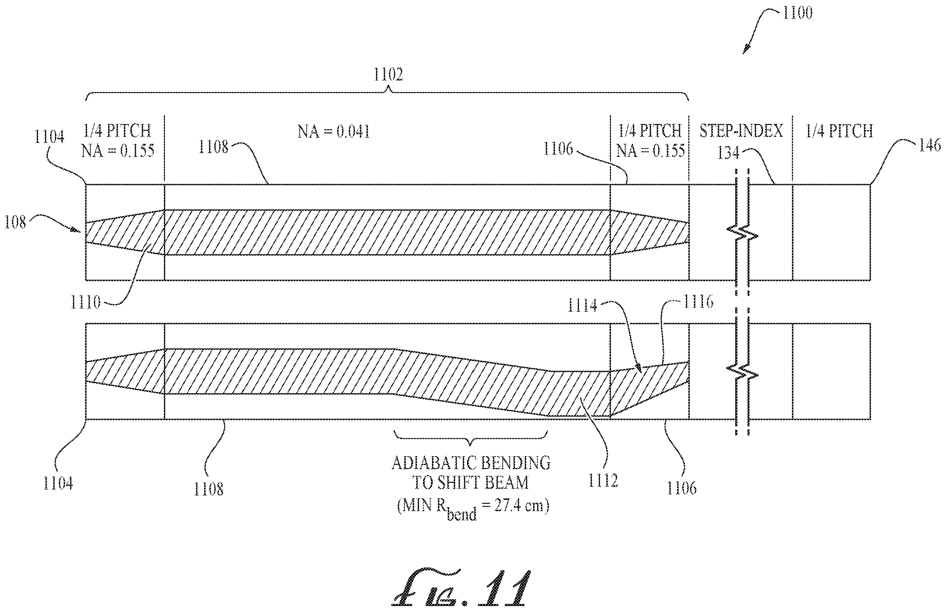

In the example of FIG. 1, first length of optical fiber 118 is a relatively short (e.g., less than 10 mm) GRIN fiber having a ¼-pitch length. At this length, input beam 108 beam reaches its maximum diameter, which is less than a 300 μm diameter GRIN core 132 in some examples. In other examples, an initial GRIN optical fiber segment may have a length of about ¼-pitch + N*½ pitch, where N is any positive integer and includes zero. Other lengths are also possible, depending on the desired application (see e.g., FIG. 11). In a GRIN fiber, light rays transmit along sinusoidal paths. The length of fiber corresponding to one sine wave period is called the pitch, defined as follows:

$$p = \frac{2\pi}{\sqrt{k}} \, ,$$

where k is the gradient constant determined by the refractive index profile of the GRIN fiber. The refractive index profile of the GRIN fiber is defined as set forth in W. J. Smith, Modern Optical Engineering, Third Edition, McGraw-Hill, Inc. (2000), p. 286:

$$\mathrm{n(r)} = n_0 \left( 1 - \left( \frac{k}{2} \right) r^{\,2} \right),$$

where $n_0$ is the axial refractive index of the GRIN fiber.

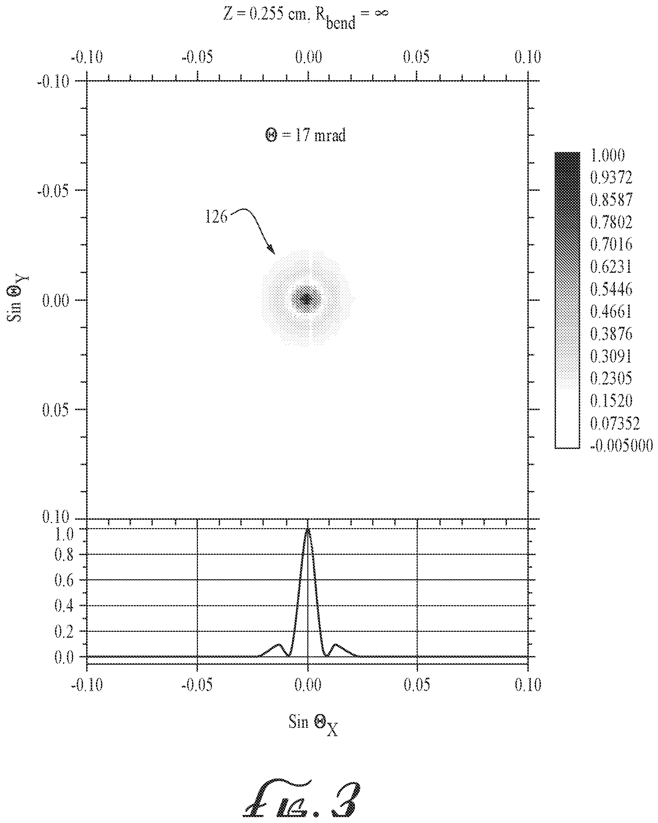

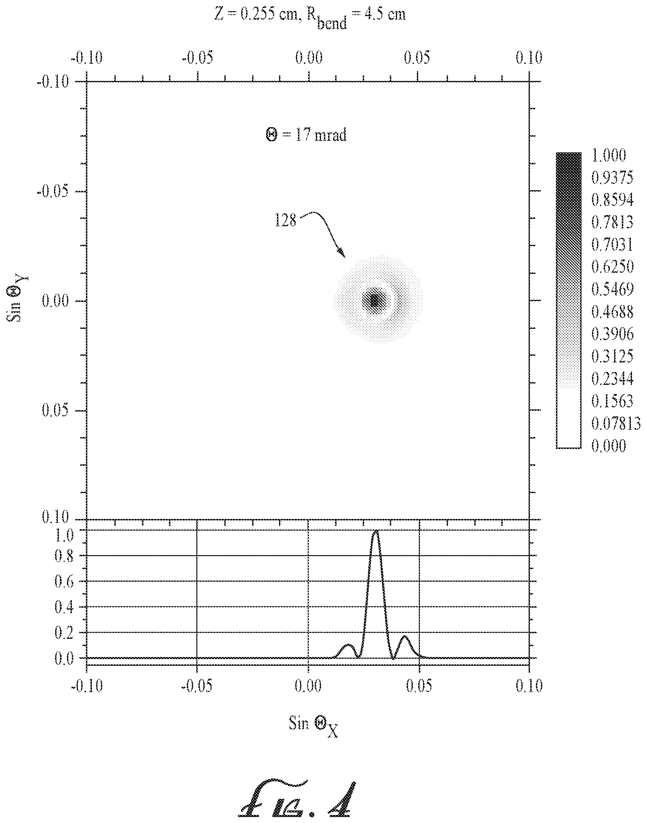

In some examples, first length of optical fiber 118 and an initial section of a second length of optical fiber 134 are bent a variable amount (or not at all) around a mandrel (not shown) or other perturbation device shown and described in FIG. 24 of the '015 patent. Angular intensity distribution 106 of input beam 108 beam is thereby varied by changing its angular offset without necessarily affecting its width. For instance, first angular intensity distribution 126 has negligible angular offset with respect to optical axis 104 (see, e.g., **FIG. 3**) when first length of optical fiber 118 is not perturbed (i.e., straight, as indicated by dashed lines on first length of optical fiber 118) whereas second angular intensity distribution 128 includes a relatively large angular offset (see, e.g., **FIG. 4**) when first length of optical fiber 118 is perturbed (e.g., bent, as indicated in **FIG.** 1).

Second length of optical fiber 134, which includes a second input 136 and a second output 138, is coupled to first output 122 and configured to receive therefrom modified beam 130. Second length of optical fiber 134 has a step-index RIP 140 configured to preserve second angular intensity distribution 128. Modified beam 130 enters a step-index fiber core 142 (e.g., core diameter of 300 μm) and propagates while substantially preserving the angular offset with respect to optical axis 104. Second angular intensity distribution 128 is preserved, i.e., its ray angles relative to optical axis 104 (i.e., the fiber core) remain substantially constant from second input 136 to second output 138. Although it is largely preserved, for purposes of clarity (and recognizing that there may be some minor variation in the distributions) this disclosure refers to second angular intensity distribution 128 at second output 138 as a preserved angular intensity distribution 144.

In some examples, second length of optical fiber 134 may be about five meters to about 50 meters long so as to transport modified beam 130 a significant distance from the source (e.g., to a processing head or tool). As modified beam 130 travels through second length of optical fiber 134, second angular intensity distribution 128 is azimuthally averaged (i.e., smoothed or symmetrized) due to normal routing (coiling or bending) of this delivery fiber. Thus, phi ray angles (azimuthal) are assumed to be scrambled in second length of optical fiber 134. The angular width of input beam 108 results from rays having slightly different angles. These rays take different paths (generally helical) and end up being scrambled azimuthally (cylindrically symmetric, phi invariant), although for simplicity FIG. 2 shows only two paths.

Finally, FIG. 1 shows optical beam delivery device 100 with a third length of optical fiber 146, e.g., a GRIN fiber. Third length of optical fiber 146 includes a third input 148 and a third output 150. Third input 148 is coupled to second output 138 and is configured to receive therefrom modified beam 130 having preserved angular intensity distribution 144. Third length of optical fiber 146 has a GRIN RIP 152 which generates, at third output 150, output beam 110 having adjustable near-field transverse spatial intensity distribution 112 corresponding to preserved angular intensity distribution 144 of modified beam 130. In some examples, output beam 110 at third output 150 is ring shaped. The diameter of the ring may be determined by the input angular offset and the thickness of the ring by the input divergence width.

FIG. 2 shows a simulated implementation of the angular offset technique shown and described previously with reference to FIG. 1. For instance, FIG. 2 shows, in an X-Z plane, an LP$_{02}$ mode field 200 of input beam 108 as it propagates through first length of optical fiber 118 along the Z-axis direction from first input 120. LP$_{02}$ mode field 200 is shown as first length of optical fiber 118 is subjected to a decreasing bend radius. "Field amplitude" refers to the light distribution, which is showing the field amplitude $|E|$ as opposed to field intensity $|E|^2$.

The bottom axis of FIG. 2 shows that propagation is simulated through a distance of a ½ GRIN pitch length, with a ¼ GRIN pitch length 202 (Z=0.255 cm) indicated by a vertical dashed line. As described previously, first length of optical fiber 118 could be cut and spliced to second input 136 of second length of optical fiber 134 at ¼ GRIN pitch length 202 or other desired lengths.

Through simulations, GRIN pitch, fiber length, and bending profile may be tailored to achieve a desired angular offset of input beam 108 with a minimal change in divergence. For example, to maximize angular offset without increasing divergence, a specific length of GRIN fiber could be used as the first length of optical fiber and subjected to bending to create a desired angular offset. The pitch of the GRIN may be selected to increase the beam diameter, thus lowering its divergence width and maximizing the ratio between angular offset and width. Specifically, for a given input beam divergence and spot size, a focal length of a ¼-pitch GRIN fiber may be chosen to decrease the divergence of the beam exiting the GRIN fiber.

FIG. 3 and FIG. 4 provide a comparison at 0.255 cm (¼ pitch length) between first angular intensity distribution 126 and second angular intensity distribution 128 shown, respectively, without bending and with bending of first length of optical fiber 118. Specifically, FIG. 4 shows that with bending, second angular intensity distribution 128 is transversely shifted in the bend plane by about 30 mrad, which is much greater than the divergence width of about 17 mrad.

FIG. 5 and FIG. 6 show results of an experiment employing a GRIN fiber having a larger pitch than the one used in the aforementioned simulations. Spliced onto the GRIN fiber is a step-index fiber. An intensity distribution of FIG. 5 shows a smaller diameter beam is formed without bending. In contrast, a ring-shaped beam is formed at the output of a spliced-on step-index fiber when the GRIN fiber is bent. The intensity distributions imaged at the output end of the step-index fiber could then be converted to near-field images with a selectable magnification by splicing another short GRIN fiber having an effective focal length (i.e., gradient constant) selected to impart magnification of the output beam, as shown in FIG. 1.

For example, an input GRIN having a gradient constant of 2.0 and output GRIN having a gradient constant of 0.5 results in an approximately $2\times$ magnification of the near field beam diameter. Likewise, an input GRIN having a gradient constant of 0.5 and output GRIN having a gradient constant of 2.0 results in an approximately $0.5\times$ magnification of the near-field beam diameter. Gradient constants ranging between 0.1 and 50 are also possible, depending on the application.

FIG. 6 also shows second angular intensity distribution 128 is circularized by propagation in second length of optical fiber 134, but the angle with the Z axis is preserved.

FIG. 7 and FIG. 8 show simulations of output beam 110 at third output 150 of third length of optical fiber 146, respectively, without and with bending applied to first length of optical fiber 118. In FIG. 7, there is no significant near-field adjustment when converting from first angular intensity distribution 126 to a near-field transverse spatial intensity distribution 702 corresponding to output beam 110 having a relatively small beam diameter. In contrast, FIG. 8 shows a significant near-field adjustment when converting from preserved angular intensity distribution 144 to a near-field transverse spatial intensity distribution 802 corresponding to output beam 110 having a ring shape. Accordingly, near-field transverse spatial intensity distribution 702 and near-field transverse spatial intensity distribution 802 show an example of adjustable near-field transverse spatial intensity distribution 112.

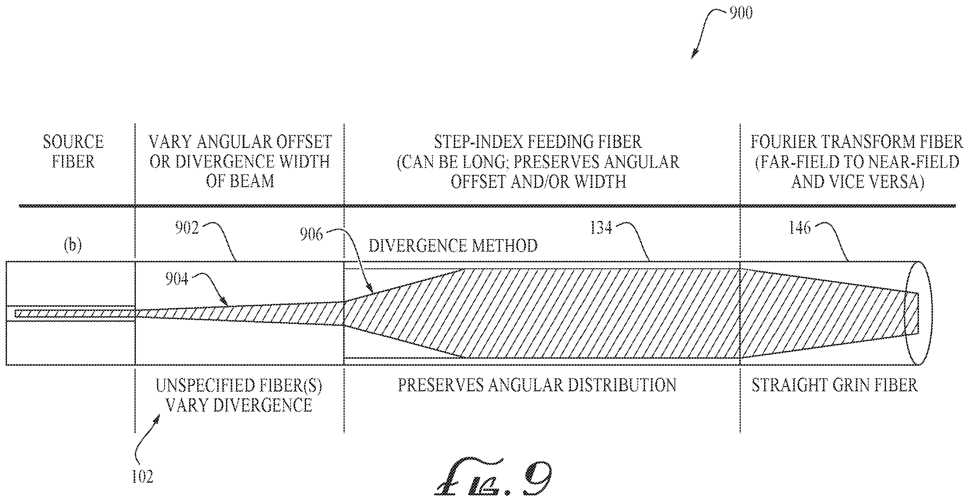

FIG. 9 shows an optical beam delivery device 900, according a second example (referred to as an angular width/divergence example). Like optical beam delivery device 100, optical beam delivery device 900 includes multiple lengths of optical fiber 102 to convert changes in angular intensity distribution to changes in near-field transverse spatial intensity distribution. But instead of having first length of optical fiber 118 configured to change the angular offset of input beam 108, optical beam delivery device 900 includes a first length of optical fiber 902 that is configured to change a width of an angular intensity distribution 904 in response to a controllable perturbation. As described previously, a modified beam 906 enters second length of optical fiber 134 (a step-index fiber) and propagates while preserving the angular distribution. Third length of optical fiber 146 in the form of a GRIN fiber at the output images modified beam 906 beam into a variable-diameter beam appearing at the output facet of the GRIN fiber.

Note that the GRIN design pitch can be selected to size the output near-field diameters and divergences. Through simulations, GRIN pitch, fiber length, and bending profile may be tailored to achieve a desired output.

Skilled persons will appreciate that various techniques and fibers may be used to increase divergence in response to perturbation of first length of optical fiber 902. For example, first length of optical fiber 902 may be a step-index fiber configured to respond to a non-adiabatic microbend (see, e.g., micro-bend 2404 in FIG. 24 of the '015 patent).

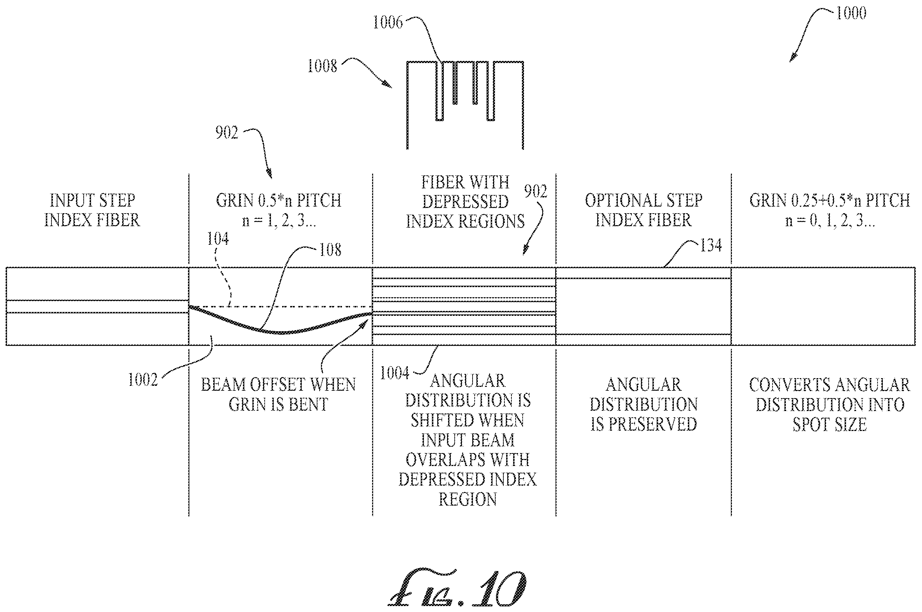

In an embodiment of the claimed invention, FIG. 10 shows an optical beam delivery device 1000 in which first length of optical fiber 902 includes a first portion 1002 and a second portion 1004 coupled to first portion 1002. First portion 1002 includes a GRIN optical fiber segment having a length of about N*½ pitch, where N is any positive integer. Other lengths are also possible, depending on the design, but the length of about N*½ pitch facilitates interaction of the beam with low-index divergence structures 1006 in second portion 1004. Divergence structures 1006 (shown in RIP 1008) are designed to increase divergence. When first portion 1002 is perturbed, input beam 108 is displaced from optical axis 104 so that it is incident upon at least one of divergence structures 1006, which increases divergence to provide a modified beam to second length of optical fiber 134. Other examples of divergence structures are shown in FIG. 20 and FIG. 21 of the '015 patent.

FIG. 11 shows another embodiment of an optical beam delivery device 1100, which includes a first length of fiber 1102 having an input GRIN portion 1104, an output GRIN portion 1106, and a central GRIN portion 1108 therebetween. Input GRIN portion 1104 is configured to collimate input beam 108 to provide a collimated beam 1110. Central GRIN portion 1108 is configured to shift collimated beam 1110 in response to controllable perturbation (e.g., bending, as shown in bottom diagram of FIG. 11) so as to provide a shifted beam 1112. Output GRIN portion 1106 is configured to focus shifted beam 1112 to provide modified beam 130 having an angular offset 1114 that is different from that of input beam 108.

Skilled persons will appreciate in light of this disclosure that both optical beam delivery device 1100 and optical beam delivery device 100 (FIG. 1) act to vary an angular offset that is delivered second length of optical fiber 134. Furthermore, optical beam delivery device 1100 may be modified to also vary divergence. For instance, by employing different NAs for input GRIN portion 1104 and output GRIN portion 1106, the angular width (divergence angle) may also be tuned. Input GRIN portion 1104 and output GRIN portion 1106 are each shown as having ¼-pitch length, but other lengths are also possible. The effective focal length of these segments may be designed to provide different divergences of modified beam 130 or to change other beam properties to accommodate the desired use case. In contrast to ¼- or ½-pitch lengths described previously for first length of optical fiber 118 (FIG. 1), optical beam delivery device 1100 also provides an example of how first length of fiber 1102 may have varied lengths for different applications.

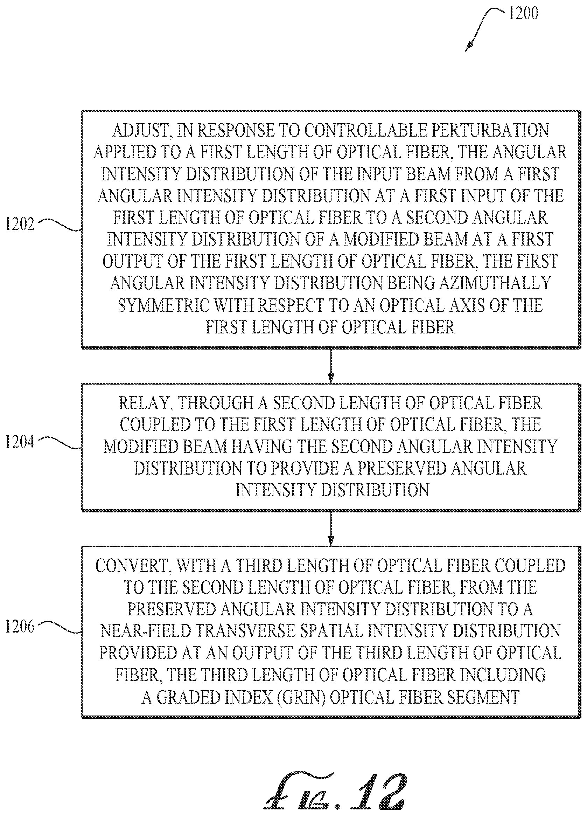

FIG. 12 shows a method 1200 of modifying an angular intensity distribution of an input beam so that it is converted to an output beam having an adjustable near-field transverse spatial intensity distribution.

In block 1202, method 1200 adjusts, in response to controllable perturbation applied to a first length of optical fiber, the angular intensity distribution of the input beam from a first angular intensity distribution at a first input of the first length of optical fiber to a second angular intensity distribution of a modified beam at a first output of the first length of optical fiber, the first angular intensity distribution being azimuthally symmetric with respect to an optical axis of the first length of optical fiber.

In block 1204, method 1200 relays, through a second length of optical fiber coupled to the first length of optical fiber, the modified beam having the second angular intensity distribution. In some cases, the second length of optical fiber largely preserves the second angular intensity distribution as the beam propagates through the fiber.

In block 1206, method 1200 converts, with a third length of optical fiber coupled to the second length of optical fiber, from the second angular intensity distribution to a near-field transverse spatial intensity distribution provided at an output of the third length of optical fiber, the third length of optical fiber including a GRIN optical fiber segment.

Having described and illustrated the general principles of examples of the presently disclosed technology, it should be apparent that the examples may be modified in arrangement and detail without departing from such principles. Skilled persons, therefore, will appreciate that many changes may be made to the details of the above-described embodiments without departing from the underlying principles of the invention. The scope of the present invention should, therefore, be determined only by the following claims.

## Claims

1. An optical beam delivery device (1000; 1100) including multiple lengths of optical fiber arranged along an optical axis, the multiple lengths of optical fiber being configured to modify an angular intensity distribution of an input beam so that it is converted to an output beam having an adjustable near-field transverse spatial intensity distribution, the optical beam delivery device (1000; 1100) comprising:

   a first length of optical fiber (902; 1102) including a first input and a first output, the first input being couplable to a source fiber and configured to receive therefrom the input beam that is azimuthally symmetric with respect to the optical axis, the first length of optical fiber (902; 1102) having a first refractive index profile (RIP) configured to produce, in response to a controllable perturbation, a change in the angular intensity distribution from a first angular intensity distribution corresponding to the input beam to a second angular intensity distribution corresponding to a modified beam at the first output;
   a second length of optical fiber (134) including a second input and a second output, the second input coupled to the first output of the first length of optical fiber (902; 1102) and configured to receive therefrom the modified beam, the second length of optical fiber having a step-index RIP configured to preserve the second angular intensity distribution and provide at the second output the modified beam with a preserved angular intensity distribution; and comprising a third length of optical fiber (146) having a length of about ¼ pitch + N*½ pitch, where N is any positive integer and includes zero, the third length of optical fiber including a third input and a third output, the third input coupled to the second output of the second length of optical fiber and configured to receive therefrom the modified beam having the preserved angular intensity distribution, the third length of optical fiber having a graded index (GRIN) RIP configured to generate at the third output the output beam having the adjustable near-field transverse spatial intensity distribution corresponding to the preserved angular intensity distribution of the modified beam; and
   **characterized in that** the first length of optical fiber (902; 1102) comprises:

      a first portion (1002) and a second portion (1004) coupled to the first portion (1002), the first portion (1002) including a GRIN optical fiber segment, the second portion (1004) including divergence structures (1006) having a refractive index configured to increase divergence; or
      an input GRIN portion (1104) configured to collimate the input beam to provide a collimated beam;
      a central GRIN portion (1108) configured to shift the collimated beam in response to the controllable perturbation so as to provide a shifted beam; and
      an output GRIN portion (1106) configured to focus the shifted beam to provide the modified beam having an angular offset that is different from that of the input beam.

2. The optical beam delivery device (1000; 1100) of claim 1, in which the GRIN optical fiber segment is responsive to the controllable perturbation configured to change a bend radius of the GRIN optical fiber segment.

3. The optical beam delivery device (1000; 1100) of claim 1, in which the second length of optical fiber (134) is a step-index optical fiber segment having a length configured to azimuthally scramble the modified beam.

4. The optical beam delivery device (1000; 1100) of claim 1, in which the third length of optical fiber (146) is configured to generate a ring-shaped beam as the output beam.

5. The optical beam delivery device (1000; 1100) of claim 1, in which the third length of optical fiber (146) has a different effective focal length than that of the first length of optical fiber (902; 1102).

6. The optical beam delivery device (1000; 1100) of claim 5, in which the different effective focal length is attributable to a different gradient constant selected to impart magnification of the output beam.

7. The optical beam delivery device (1000; 1100) of claim 1, in which the first length of optical fiber (902; 1102) is configured to change the first angular intensity distribution by increasing an angular width of the input beam.

8. The optical beam delivery device (1000; 1100) of claim 7, in which the second length of optical fiber (134) is configured to preserve the angular width of the modified beam.

9. The optical beam delivery device (1000; 1100) of claim 7, in which the first length of optical fiber (902; 1102) is responsive to the controllable perturbation applied to the first length of optical fiber (902; 1102) as a microbend.

10. The optical beam delivery device (1000; 1100) of claim 1, in which the first length of optical fiber (902; 1102) includes a first portion (1002) and a second portion (1004) coupled to the first portion (1002), the first portion (1002) including a GRIN optical fiber segment, the second portion (1004) including divergence structures (1006) having a refractive index configured to increase divergence; wherein the GRIN optical fiber segment has a length of about N*½ pitch, where N is any positive integer.

11. An optical beam delivery system comprising the optical beam delivery device (1000; 1100) of claim 1 and a ring fiber acting as the source fiber coupled thereto; optionally further comprising a variable beam characteristic (VBC) device including the ring fiber.

12. An optical beam delivery system comprising the optical beam delivery device (1000; 1100) of claim 1 and a step-index fiber acting as the source fiber coupled thereto.

13. A method of modifying an angular intensity distribution of an input beam so that it is converted to an output beam having an adjustable near-field transverse spatial intensity distribution, the method comprising:

adjusting, in response to controllable perturbation applied to a first length of optical fiber (902; 1102), the angular intensity distribution of the input beam from a first angular intensity distribution at a first input of the first length of optical fiber (902; 1102) to a second angular intensity distribution of a modified beam at a first output of the first length of optical fiber (902; 1102), the first angular intensity distribution being azimuthally symmetric with respect to an optical axis of the first length of optical fiber (902; 1102); relaying, through a second length of optical fiber (134) coupled to the first length of optical fiber (902; 1102), the modified beam having the second angular intensity distribution to provide a preserved angular intensity distribution; and converting, with a third length of optical fiber (146) coupled to the second length of optical fiber, from the preserved angular intensity distribution to a near-field transverse spatial intensity distribution provided at an output of the third length of optical fiber (146), the third length of optical fiber (146) including a graded index (GRIN) optical fiber segment; wherein the first length of optical fiber (902; 1102) comprises:

a first portion (1002) and a second portion (1004) coupled to the first portion (1002), the first portion (1002) including a GRIN optical fiber segment, the second portion (1004) including divergence structures (1006) having a refractive index configured to increase divergence; or an input GRIN portion (1104) configured to collimate the input beam to provide a collimated beam; a central GRIN portion (1108) configured to shift the collimated beam in response to the controllable perturbation so as to provide a shifted beam; and an output GRIN portion (1106) configured to focus the shifted beam to provide the modified beam having an angular offset that is different from that of the input beam.

**14.** The method of claim 13, further comprising adjusting the angular intensity distribution by changing an angular offset or an angular width in response to the controllable perturbation.

**15.** The method of claim 13, in which the third length of optical fiber (146) is configured to generate a ring-shaped beam as the output beam.

**Patentansprüche**

**1.** Optische Strahlführungsvorrichtung (1000; 1100), einschließlich mehrerer Glasfaserlängen, die entlang einer optischen Achse angeordnet sind, wobei die mehreren Glasfaserlängen dazu ausgebildet sind, eine Winkelintensitätsverteilung eines Eingangsstrahls zu modifizieren, so dass er in einen Ausgangsstrahl umgewandelt wird, der eine einstellbare transversale räumliche Intensitätsverteilung im Nahfeld aufweist, wobei die optische Strahlführungsvorrichtung (1000; 1100) umfasst:

eine erste Glasfaserlänge (902; 1102), einschließend einen ersten Eingang und einen ersten Ausgang, wobei der erste Eingang an eine Quellfaser koppelbar ist und dazu ausgebildet ist, von dort den Eingangsstrahl zu empfangen, der azimutal symmetrisch hinsichtlich der optischen Achse ist, wobei die erste Glasfaserlänge (902; 1102) ein erstes Brechungsindexprofil (RIP) aufweist, das dazu ausgebildet ist, als Reaktion auf eine steuerbare Störung eine Änderung in der Winkelintensitätsverteilung von einer ersten Winkelintensitätsverteilung, die dem Eingangsstrahl entspricht, zu einer zweiten Winkelintensitätsverteilung, die einem modifizierten Strahl am ersten Ausgang entspricht, zu erzeugen;
eine zweite Glasfaserlänge (134), einschließend einen zweiten Eingang und einen zweiten Ausgang, wobei der zweite Eingang an den ersten Ausgang der ersten Glasfaserlänge (902; 1102) gekoppelt ist und ausgebildet ist, um von dort den modifizierten Strahl zu empfangen, wobei die zweite Glasfaserlänge ein Stufenindex-RIP aufweist, das dazu ausgebildet ist, die zweite Winkelintensitätsverteilung zu bewahren und am zweiten Ausgang den modifizierten Strahl mit einer bewahrten Winkelintensitätsverteilung bereitzustellen; und
umfassend eine dritte Glasfaserlänge (146), die eine Länge von etwa ¼-Pitchlänge + N*½-Pitchlänge aufweist, wobei N eine beliebige positive ganze Zahl ist und Null einschließt, wobei die dritte Glasfaserlänge einen dritten Eingang und einen dritten Ausgang einschließt, wobei der dritte Eingang an den zweiten Ausgang der zweiten Glasfaserlänge gekoppelt ist und dazu ausgebildet ist, von dort den modifizierten Strahl zu empfangen, der die bewahrte Winkelintensitätsverteilung aufweist, wobei die dritte Glasfaserlänge ein Gradientenindex- (GRIN) -RIP aufweist, das dazu ausgebildet ist, am dritten Ausgang den Ausgangsstrahl zu erzeugen, der die einstellbare transversale räumliche Intensitätsverteilung im Nahfeld aufweist, die der bewahrten Winkelintensitätsverteilung des modifizierten Strahls entspricht; und
**dadurch gekennzeichnet, dass** die erste Glasfaserlänge (902; 1102) umfasst
einen ersten Abschnitt (1002) und einen zweiten Abschnitt (1004), der an den ersten Abschnitt (1002) gekoppelt ist, wobei der erste Abschnitt (1002) ein GRIN-Glasfasersegment einschließt, wobei der zweite Abschnitt (1004) Divergenzstrukturen (1006) einschließt, die einen Brechungsindex aufweisen, der dazu ausgebildet ist, Divergenz zu erhöhen; oder
einen Eingangs-GRIN-Abschnitt (1104), der dazu ausgebildet ist, den Eingangsstrahl zu kollimieren, um einen kollimierten Strahl bereitzustellen;
einen zentralen GRIN-Abschnitt (1108), der dazu ausgebildet ist, den kollimierten Strahl als Reaktion auf die steuerbare Störung zu verschieben, so dass ein verschobener Strahl bereitgestellt wird; und
einen Ausgangs-GRIN-Abschnitt (1106), der dazu ausgebildet ist, den verschobenen Strahl zu fokussieren, um den modifizierten Strahl bereitzustellen, der einen Winkelversatz aufweist, der sich von demjenigen des Eingangsstrahls unterscheidet.

**2.** Optische Strahlführungsvorrichtung (1000; 1100) nach Anspruch 1, wobei das GRIN-Glasfasersegment auf die steuerbare Störung, die dazu ausgebildet ist, einen Biegeradius des GRIN-Glasfasersegments zu ändern, ansprechend ist.

**3.** Optische Strahlführungsvorrichtung (1000; 1100) nach Anspruch 1, wobei die zweite Glasfaserlänge (134) ein Stufenindexglasfaserabschnitt ist, der eine Länge aufweist, die dazu ausgebildet ist, den modifizierten Strahl azimutal zu verwürfeln.

**4.** Optische Strahlführungsvorrichtung (1000; 1100) nach Anspruch 1, wobei die dritte Glasfaserlänge (146) dazu ausgebildet ist, einen ringförmigen Strahl als den Ausgangsstrahl zu erzeugen.

**5.** Optische Strahlführungsvorrichtung (1000; 1100) nach Anspruch 1, wobei die dritte Glasfaserlänge (146) eine andere effektive Brennweite als diejenige der ersten Glasfaserlänge (902; 1102) aufweist.

6. Optische Strahlführungsvorrichtung (1000; 1100) nach Anspruch 5, wobei die andere effektive Brennweite auf eine andere Gradientkonstante zurückzuführen ist, die ausgewählt ist, um eine Vergrößerung des Ausgangsstrahls zu bewirken.

7. Optische Strahlführungsvorrichtung (1000; 1100) nach Anspruch 1, wobei die erste Glasfaserlänge (902; 1102) dazu ausgebildet ist, die erste Winkelintensitätsverteilung zu ändern, indem eine Winkelbreite des Eingangsstrahls erhöht wird.

8. Optische Strahlführungsvorrichtung (1000; 1100) nach Anspruch 7, wobei die zweite Glasfaserlänge (134) dazu ausgebildet ist, die Winkelbreite des modifizierten Strahls zu bewahren.

9. Optische Strahlführungsvorrichtung (1000; 1100) nach Anspruch 7, wobei die erste Glasfaserlänge (902; 1102) auf die steuerbare Störung, die an der ersten Glasfaserlänge (902; 1102) als eine Mikrobiegung angelegt wird, ansprechend ist.

10. Optische Strahlführungsvorrichtung (1000; 1100) nach Anspruch 1, wobei die erste Glasfaserlänge (902; 1102) einen ersten Abschnitt (1002) und einen zweiten Abschnitt (1004) einschließt, der an den ersten Abschnitt (1002) gekoppelt ist, wobei der erste Abschnitt (1002) ein GRIN-Glasfasersegment einschließt, wobei der zweite Abschnitt (1004) Divergenzstrukturen (1006) einschließt, die einen Brechungsindex aufweisen, der dazu ausgebildet ist, Divergenz zu erhöhen; wobei das GRIN-Glasfasersegment eine Länge von etwa $N \cdot \frac{1}{2}$-Pitchlänge aufweist, wobei N eine beliebige positive ganze Zahl ist.

11. Optisches Strahlführungssystem umfassend die optische Strahlführungsvorrichtung (1000; 1100) nach Anspruch 1 und eine Ringfaser, die als die Quellfaser wirkt, die daran gekoppelt ist; wahlweise weiter umfassend eine Vorrichtung mit variablen Strahleigenschaften (VBC-Vorrichtung), die die Ringfaser einschließt.

12. Optisches Strahlführungssystem umfassend die optische Strahlführungsvorrichtung (1000; 1100) nach Anspruch 1 und eine Stufenindexfaser, die als die Quellfaser wirkt, die daran gekoppelt ist.

13. Verfahren zum Modifizieren einer Winkelintensitätsverteilung eines Eingangsstrahls, so dass er in einen Ausgangsstrahl umgewandelt wird, der eine einstellbare transversale räumliche Intensitätsverteilung im Nahfeld aufweist, wobei das Verfahren umfasst:

Einstellen, als Reaktion auf eine steuerbare Störung, die an eine erste Glasfaserlänge (902; 1102) angelegt wird, der Winkelintensitätsverteilung des Eingangsstrahls von einer ersten Winkelintensitätsverteilung an einem ersten Eingang der ersten Glasfaserlänge (902; 1102) zu einer zweiten Winkelintensitätsverteilung eines modifizierten Strahls an einem ersten Ausgang der ersten Glasfaserlänge (902; 1102), wobei die erste Winkelintensitätsverteilung azimutal symmetrisch hinsichtlich einer optischen Achse der ersten Glasfaserlänge (902; 1102) ist;

Weiterleiten, durch eine zweite Glasfaserlänge (134), die an die erste Glasfaserlänge (902; 1102) gekoppelt ist, des modifizierten Strahls, der die zweite Winkelintensitätsverteilung aufweist, um eine bewahrte Winkelintensitätsverteilung bereitzustellen; und

Umwandeln, mit einer dritten Glasfaserlänge (146), die an die zweite Glasfaserlänge gekoppelt ist, von der bewahrten Winkelintensitätsverteilung zu einer transversalen räumlichen Intensitätsverteilung im Nahfeld, die an einem Ausgang der dritten Glasfaserlänge (146) bereitgestellt wird, wobei die dritte Glasfaserlänge (146) ein Gradientenindex- (GRIN) -Glasfasersegment einschließt;

wobei die erste Glasfaserlänge (902; 1102) umfasst:

einen ersten Abschnitt (1002) und einen zweiten Abschnitt (1004), der an den ersten Abschnitt (1002) gekoppelt ist, wobei der erste Abschnitt (1002) ein GRIN-Glasfasersegment einschließt, wobei der zweite Abschnitt (1004) Divergenzstrukturen (1006) einschließt, die einen Brechungsindex aufweisen, der dazu ausgebildet ist, Divergenz zu erhöhen; oder

einen Eingangs-GRIN-Abschnitt (1104), der dazu ausgebildet ist, den Eingangsstrahl zu kollimieren, um einen kollimierten Strahl bereitzustellen;

einen zentralen GRIN-Abschnitt (1108), der dazu ausgebildet ist, den kollimierten Strahl als Reaktion auf die steuerbare Störung zu verschieben, so dass ein verschobener Strahl bereitgestellt wird; und

einen Ausgangs-GRIN-Abschnitt (1106), der dazu ausgebildet ist, den verschobenen Strahl zu fokussieren, um den modifizierten Strahl bereitzustellen, der einen Winkelversatz aufweist, der sich von demjenigen des Eingangsstrahls unterscheidet.

14. Verfahren nach Anspruch 13, wobei das Verfahren weiter das Einstellen der Winkelintensitätsverteilung umfasst, indem ein Winkelversatz oder eine Winkelbreite als Reaktion auf die steuerbare Störung geändert wird.

**15.** Verfahren nach Anspruch 13, wobei die dritte Glasfaserlänge (146) dazu ausgebildet ist, einen ringförmigen Strahl als den Ausgangsstrahl zu erzeugen.

**Revendications**

**1.** Dispositif (1000 ; 1100) de distribution de faisceau optique incluant de multiples longueurs de fibre optique agencées le long d'un axe optique, les multiples longueurs de fibre optique étant configurées pour modifier une répartition d'intensité angulaire d'un faisceau d'entrée de sorte qu'il soit converti en un faisceau de sortie présentant une répartition d'intensité spatiale transversale en champ proche ajustable, le dispositif (1000 ; 1100) de distribution de faisceau optique comprenant :

une première longueur de fibre optique (902 ; 1102) incluant une première entrée et une première sortie, la première entrée pouvant être couplée à une fibre source et étant configurée pour recevoir de celle-ci le faisceau d'entrée qui est azimutalement symétrique par rapport à l'axe optique, la première longueur de fibre optique (902 ; 1102) présentant un premier profil d'indice de réfraction (RIP) configuré pour produire, en réponse à une perturbation contrôlable, une modification de la répartition d'intensité angulaire d'une ;première répartition d'intensité angulaire correspondant au faisceau d'entrée à une deuxième répartition d'intensité angulaire correspondant à un faisceau modifié au niveau de la première sortie
une deuxième longueur de fibre optique (134) incluant une deuxième entrée et une deuxième sortie, la deuxième entrée étant couplée à la première sortie de la première longueur de fibre optique (902 ; 1102) et configurée pour recevoir, de celle-ci, le faisceau modifié, la deuxième longueur de fibre optique présentant un RIP à saut d'indice configuré pour préserver la deuxième répartition d'intensité angulaire et fournir, au niveau de la deuxième sortie, le faisceau modifié avec une répartition d'intensité angulaire préservée ; et
comprenant une troisième longueur de fibre optique (146) présentant une longueur d'environ ¼ pas + N*½ pas, où N est un nombre entier positif quelconque et inclut zéro, la troisième longueur de fibre optique incluant une troisième entrée et une troisième sortie, la troisième entrée étant couplée à la deuxième sortie de la deuxième longueur de fibre optique et configurée pour recevoir, de celle-ci, le faisceau modifié présentant la répartition d'intensité angulaire préservée, la troisième longueur de fibre optique présentant un RIP à gradient d'indice (GRIN) configuré pour générer, au niveau de la troisième sortie, le faisceau de sortie présentant la répartition d'intensité spatiale transversale en champ proche ajustable correspondant à la répartition d'intensité angulaire préservée du faisceau modifié ; et
**caractérisé en ce que** la première longueur de fibre optique (902 ; 1102) comprend :

une première partie (1002) et une deuxième partie (1004) couplées à la première partie (1002), la première partie (1002) incluant un segment de fibre optique GRIN, la deuxième partie (1004) incluant des structures de divergence (1006) présentant un indice de réfraction configuré pour augmenter la divergence ; ou
une partie GRIN d'entrée (1104) configurée pour collimater le faisceau d'entrée pour fournir un faisceau collimaté ;
une partie GRIN centrale (1108) configurée pour déplacer le faisceau collimaté en réponse à la perturbation contrôlable de manière à fournir un faisceau déplacé ; et
une partie GRIN de sortie (1106) configurée pour focaliser le faisceau déplacé pour fournir le faisceau modifié présentant un décalage angulaire qui est différent de celui du faisceau d'entrée.

**2.** Dispositif de distribution de faisceau optique (1000 ; 1100) selon la revendication 1, dans lequel le segment de fibre optique GRIN est réactif à la perturbation contrôlable configurée pour modifier un rayon de cintrage du segment de fibre optique GRIN.

**3.** Dispositif de distribution de faisceau optique (1000 ; 1100) selon la revendication 1, dans lequel la deuxième longueur de fibre optique (134) est un segment de fibre optique à saut d'indice présentant une longueur configurée pour brouiller azimutalement le faisceau modifié.

**4.** Dispositif de distribution de faisceau optique (1000 ; 1100) selon la revendication 1, dans lequel la troisième longueur de fibre optique (146) est configurée pour générer un faisceau en forme d'anneau comme faisceau de sortie.

**5.** Dispositif de distribution de faisceau optique (1000 ; 1100) selon la revendication 1, dans lequel la troisième longueur de fibre optique (146) présente une distance focale effective différente de celle de la première longueur de fibre optique (902 ; 1102).

**6.** Dispositif de distribution de faisceau optique (1000 ; 1100) selon la revendication 5, dans lequel la distance focale effective différente est attribuable à une constante de gradient différente sélectionnée pour appliquer un grossissement du faisceau de sortie.

7. Dispositif de distribution de faisceau optique (1000 ; 1100) selon la revendication 1, dans lequel la première longueur de fibre optique (902 ; 1102) est configurée pour modifier la première répartition d'intensité angulaire en augmentant une largeur angulaire du faisceau d'entrée.

8. Dispositif de distribution de faisceau optique (1000 ; 1100) selon la revendication 7, dans lequel la deuxième longueur de fibre optique (134) est configurée pour préserver la largeur angulaire du faisceau modifié.

9. Dispositif de distribution de faisceau optique (1000 ; 1100) selon la revendication 7, dans lequel la première longueur de fibre optique (902 ; 1102) est réactive à la perturbation contrôlable appliquée à la première longueur de fibre optique (902 ; 1102) sous forme de microcourbure.

10. Dispositif de distribution de faisceau optique (1000 ; 1100) selon la revendication 1, dans lequel la première longueur de fibre optique (902 ; 1102) inclut une première partie (1002) et une deuxième partie (1004) couplée à la première partie (1002), la première partie (1002) incluant un segment de fibre optique GRIN, la deuxième partie (1004) incluant des structures de divergence (1006) présentant un indice de réfraction configuré pour augmenter la divergence ; dans lequel le segment de fibre optique GRIN présente une longueur d'environ N*½ pas, où N est un nombre entier positif quelconque.

11. Système de distribution de faisceau optique comprenant le dispositif de distribution de faisceau optique (1000 ; 1100) selon la revendication 1 et une fibre annulaire agissant comme fibre source couplée à celui-ci ; comprenant en outre facultativement un dispositif à caractéristique de faisceau variable (VBC) incluant la fibre annulaire.

12. Système de distribution de faisceau optique comprenant le dispositif de distribution de faisceau optique (1000 ; 1100) selon la revendication 1 et une fibre à saut d'indice agissant comme fibre source couplée à celui-ci.

13. Procédé de modification d'une répartition d'intensité angulaire d'un faisceau d'entrée de sorte qu'il soit converti en un faisceau de sortie présentant une répartition d'intensité spatiale transversale en champ proche ajustable, le procédé comprenant :

l'ajustement, en réponse à une perturbation contrôlable appliquée à une première longueur de fibre optique (902 ; 1102), de la répartition d'intensité angulaire du faisceau d'entrée d'une première répartition d'intensité angulaire au niveau d'une première entrée de la première longueur de fibre optique (902 ; 1102) à une deuxième répartition d'intensité angulaire d'un faisceau modifié au niveau d'une première sortie de la première longueur de fibre optique (902 ; 1102), la première répartition d'intensité angulaire étant azimutalement symétrique par rapport à un axe optique de la première longueur de fibre optique (902 ; 1102) ;

le relais, à travers une deuxième longueur de fibre optique (134) couplée à la première longueur de fibre optique (902 ; 1102), le faisceau modifié présentant la deuxième répartition d'intensité angulaire pour fournir une répartition d'intensité angulaire préservée ; et

la conversion, avec une troisième longueur de fibre optique (146) couplée à la deuxième longueur de fibre optique, de la répartition d'intensité angulaire préservée en une répartition d'intensité spatiale transversale en champ proche fournie à une sortie de la troisième longueur de fibre optique (146), la troisième longueur de fibre optique (146) incluant un segment de fibre optique à gradient d'indice (GRIN) ;

dans lequel la première longueur de fibre optique (902 ; 1102) comprend :

une première partie (1002) et une deuxième partie (1004) couplées à la première partie (1002), la première partie (1002) incluant un segment de fibre optique GRIN, la deuxième partie (1004) incluant des structures de divergence (1006) présentant un indice de réfraction configuré pour augmenter la divergence ; ou

une partie GRIN d'entrée (1104) configurée pour collimater le faisceau d'entrée pour fournir un faisceau collimaté ;

une partie GRIN centrale (1108) configurée pour déplacer le faisceau collimaté en réponse à la perturbation contrôlable de manière à fournir un faisceau déplacé ; et

une partie GRIN de sortie (1106) configurée pour focaliser le faisceau déplacé pour fournir le faisceau modifié présentant un décalage angulaire qui est différent de celui du faisceau d'entrée.

14. Procédé selon la revendication 13, comprenant en outre l'ajustement de la répartition d'intensité angulaire en modifiant un décalage angulaire ou une largeur angulaire en réponse à la perturbation contrôlable.

**15.** Procédé selon la revendication 13, dans lequel la troisième longueur de fibre optique (146) est configurée pour générer un faisceau en forme d'anneau comme faisceau de sortie.

*fig.1*

FIELD AMPLITUDE

Z = 0.255

(a)

X POSITION / μm

Z POSITION / cm

200

202

*Fig. 2*

*Fig. 3*

$Z = 0.255$ cm, $R_{bend} = 4.5$ cm

$\Theta = 17$ mrad

128

*Fig. 4*

$\Theta_{div}$ = 64.6 mrad

Fig. 5

$\Theta_{div}$ = 112 mrad

FIG. 6

*Fig. 7*

Fig. 8

| SOURCE FIBER | VARY ANGULAR OFFSET OR DIVERGENCE WIDTH OF BEAM | STEP-INDEX FEEDING FIBER (CAN BE LONG; PRESERVES ANGULAR OFFSET AND/OR WIDTH | FOURIER TRANSFORM FIBER (FAR-FIELD TO NEAR-FIELD AND VICE VERSA) |
|---|---|---|---|
| (b) | 902 906 DIVERGENCE METHOD 904 | 134 | 146 |
| | UNSPECIFIED FIBER(S) VARY DIVERGENCE 102 | PRESERVES ANGULAR DISTRIBUTION | STRAIGHT GRIN FIBER |

900

$\mathcal{F}$ıɢ.9

EP 4 437 375 B1

INPUT STEP INDEX FIBER

GRIN 0.5*n PITCH n = 1, 2, 3...

FIBER WITH DEPRESSED INDEX REGIONS

OPTIONAL STEP INDEX FIBER

GRIN 0.25+0.5*n PITCH n = 0, 1, 2, 3...

BEAM OFFSET WHEN GRIN IS BENT

ANGULAR DISTRIBUTION IS SHIFTED WHEN INPUT BEAM OVERLAPS WITH DEPRESSED INDEX REGION

ANGULAR DISTRIBUTION IS PRESERVED

CONVERTS ANGULAR DISTRIBUTION INTO SPOT SIZE

*fig.10*

EP 4 437 375 B1

_Fig. 11_

~1200

ADJUST, IN RESPONSE TO CONTROLLABLE PERTURBATION
APPLIED TO A FIRST LENGTH OF OPTICAL FIBER, THE ANGULAR
INTENSITY DISTRIBUTION OF THE INPUT BEAM FROM A FIRST
ANGULAR INTENSITY DISTRIBUTION AT A FIRST INPUT OF THE
1202 — FIRST LENGTH OF OPTICAL FIBER TO A SECOND ANGULAR
INTENSITY DISTRIBUTION OF A MODIFIED BEAM AT A FIRST
OUTPUT OF THE FIRST LENGTH OF OPTICAL FIBER, THE FIRST
ANGULAR INTENSITY DISTRIBUTION BEING AZIMUTHALLY
SYMMETRIC WITH RESPECT TO AN OPTICAL AXIS OF THE
FIRST LENGTH OF OPTICAL FIBER

RELAY, THROUGH A SECOND LENGTH OF OPTICAL FIBER
COUPLED TO THE FIRST LENGTH OF OPTICAL FIBER, THE
1204 — MODIFIED BEAM HAVING THE SECOND ANGULAR INTENSITY
DISTRIBUTION TO PROVIDE A PRESERVED ANGULAR
INTENSITY DISTRIBUTION

CONVERT, WITH A THIRD LENGTH OF OPTICAL FIBER COUPLED
TO THE SECOND LENGTH OF OPTICAL FIBER, FROM THE
PRESERVED ANGULAR INTENSITY DISTRIBUTION TO A
1206 — NEAR-FIELD TRANSVERSE SPATIAL INTENSITY DISTRIBUTION
PROVIDED AT AN OUTPUT OF THE THIRD LENGTH OF OPTICAL
FIBER, THE THIRD LENGTH OF OPTICAL FIBER INCLUDING
A GRADED INDEX (GRIN) OPTICAL FIBER SEGMENT

*Fig. 12*

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63264574
- US 10423015 B

- US 9250390 B2

**Non-patent literature cited in the description**

- **W. J. SMITH**. Modern Optical Engineering. McGraw-Hill, Inc., 2000, 286